# EUROPEAN PATENT SPECIFICATION

(11) **EP 0 978 916 B1**
(45) Date of publication and mention of the grant of the patent: **12.03.2003**
(21) Application number: 99100697.4
(22) Date of filing: 15.01.1999
(51) Int. Cl.: H02G 3/06

(54) **Adjustable angle connection for wireways or the like**
Verstellbare Eck-Verbindung für Kabelkanäle
Connexion d'angle ajustable pour canalisations de cables

(30) Priority: 05.08.1998 IT GE980068
(43) Date of publication of application: 09.02.2000
(73) Proprietor: BOCCHIOTTI SOCIETA'PER L'INDUSTRIA ELETTROTECNICA S.P.A., I-16147 Genova (IT)
(72) Inventor: Messeri, Massimo, 16121 Genova (IT)
(74) Representative: Porsia, Attilio, Dr.

(56) References cited:
- EP-A- 0 734 107
- FR-A- 2 727 578

## Description

The present invention relates to electric cable trunkings or the like, and in particular it relates to the angle connections for internal corners for joining up the said cable trunkings.

In the laying of electric wiring systems in cable trunkings, it is normal to encounter the need to overcome concave angles that are found in the perimeter of the room or rooms in which a system is to be installed. In these cases, merely bringing up together the two portions of cable trunkings leads to a solution which is far from satisfactory both from the aesthetic point of view and from the practical point of view.

At present, wall-mounted cable trunkings systems provided with angle connections are quite widespread. Obviously, a problem is often encountered which is linked to the fact that the corners in question are not at right angles, but present a few degrees of deviation from a right angle, generally in the range of ±15°. In this case, it is necessary to provide the installer with an adjustable connection, i.e., one that enables adaptation to the conditions that are encountered each time. The aforesaid connections normally consist of two elements hinged together, and one of the two elements normally presents a flap at the hinged end, which is shaped so as to cover the maximum angle for which the connection can be used.

However, even though these devices solve a number of problems, they may also present certain unquestionable disadvantages. In particular, at the moment when a given angle is chosen for the connection, the excess material present for adapting to various angles must be removed from the connection. This involves the need to make a cut in the material on the three walls that make up each element of the connection, this being a far from easy operation, the results of which may often be not very satisfactory.

In order to get round this type of problem, some manufacturers have hinged the two elements of the connection at the wall corresponding to the closing plane of the cable trunkings cover. However, the results, which were good for angles of approximately 90°, led to the need to make numerous cuts in the material for angles greater than 90°, and even left wide openings in points corresponding to the edges that rested against the walls for angles of less than 90°.

The French patent application FR 2 727 578 A discloses an adjustable angle connection for wall-mounted cable trunkings according to the preamble of the present claim 1 and suitable for both internal and external wall angles. However, the axis of relative oscillation of the two elements making up the known angle connection is fixed relative to both elements.

The purpose of the present invention is thus to provide an angle connection which enables a convenient joining of portions of cable trunkings without presenting the problems inherent in the devices known to the state of the art, and without further constructional complications.

The subject of the present invention is therefore an adjustable angle connection for electric cable trunkings or the like, the said connection comprising a first element provided with two mouths set with their respective axes oriented with respect to one another so as to form a given angle, one of the said mouths being provided with means of coupling with a cable trunking or the like, the other mouth presenting the possibility of being coupled with one end of a second element, which is provided at its opposite end with means for coupling with a cable trunking, the said second element presenting the possibility of being connected with the said first element in an oscillating way with respect to the latter, characterised in that the axis of oscillation is translatable along the second element.

In one embodiment, the said first element comprises two flaps set on parallel planes, joined together by means of another flap, preferably made of one piece with the other two flaps and set perpendicular to the planes of the said latter flaps, the two free sides of each flap being parallel to the direction of each of the axes of the mouths. Advantageously, at the mouth that is to be coupled with the said second element, the said flaps present guide lines for the cutting of at least one portion of the same, i.e., pre-fracture lines.

Further advantages and characteristics of the present invention will appear evident from the ensuing detailed description of a number of embodiments of the same, given merely to provide nonlimiting examples, with reference to the drawings attached, in which:
Figure 1 is a perspective view of a first embodiment of the angle connection according to the present invention, divided into the two elements making it up;
Figure 2 shows the connection illustrated in Figure 1, in the 90° assembly arrangement;
Figure 3 is a cross-sectional view of the connection according to the invention, assembled at an angle greater than 90°;
Figure 4 is similar to Figure 3, and in this case the assembly is made at an angle of less than 90°;
Figure 5 is a perspective view of a second embodiment of the connection according to the present invention, divided into the two elements making it up; and
Figure 6 is a perspective view of an application of the connection according to the embodiment illustrated in Figure 5.

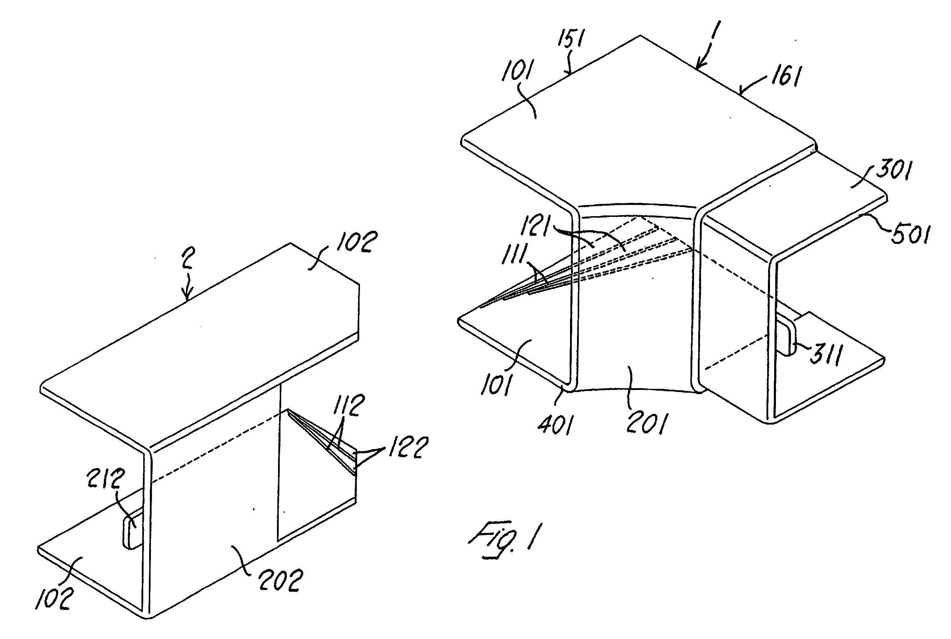

Figure 1 illustrates an embodiment of the angle connection according to the present invention, in which the number 1 designates a first element of the said connection. This element comprises the flaps 101 set on planes parallel to one another, connected together by the flap 201, made out of one piece with the said flaps and having a concave shape, in particular like that of the sector of a cylinder. The element 1 has two mouths, 401 and 501. The mouth 501 is provided with means of coupling with a cable trunking, which are made of a single piece with the said element, in the form of a flange 301 provided with the tab 311. The other mouth 401 is designed for coupling with the element 2 of the angle connection. The two mouths are oriented with their respective axes set at 90° to one another. Also the side edges 151 and 161 of the flaps 101, which are designed to rest against the walls, are oriented in such a way as to form an angle of 90°. On the internal faces of the flaps 101 are formed the lines 111 that identify portions 121 designed for being cut away.

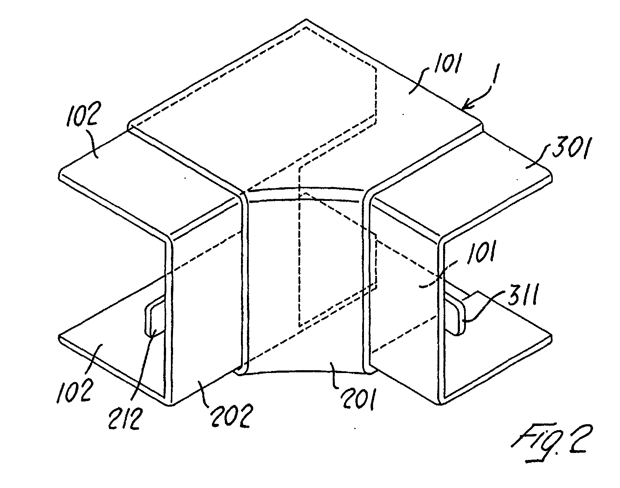

The element 2 comprises, instead, two flaps 102, set on parallel planes joined together by a flap 202 set on one plane orthogonal to that of the aforesaid flaps 102. At one end, the element 2 presents the tab 212 for coupling with a cable trunking. Also the flaps 102, as in the element 1, present, on the internal face, lines 112 which identify portions 122 to be cut away. In Figure 2, the connection illustrated in Figure 1 is shown with its two elements 1 and 2 assembled so as to form an angle of approximately 90°. Corresponding parts are designated with the same numbers.

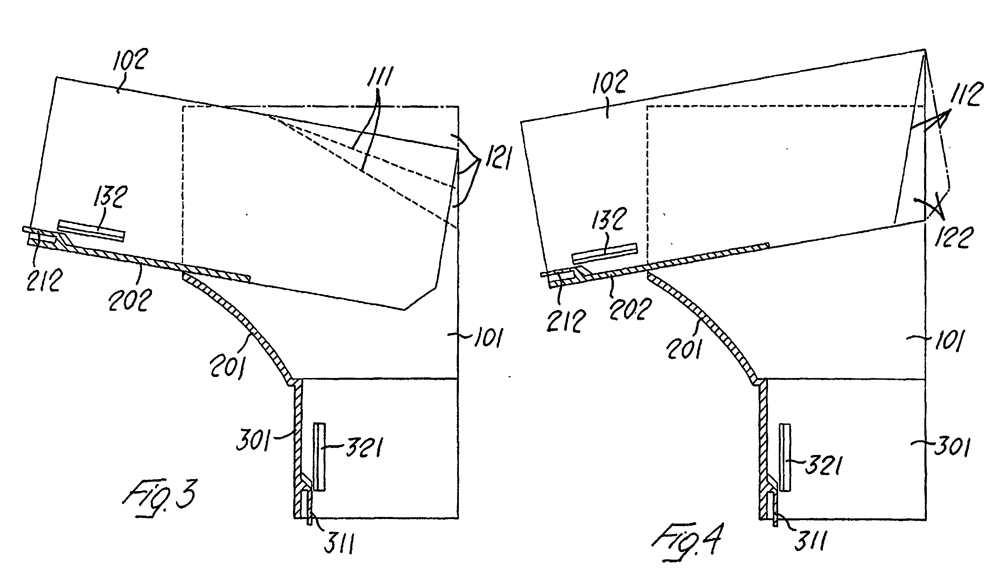

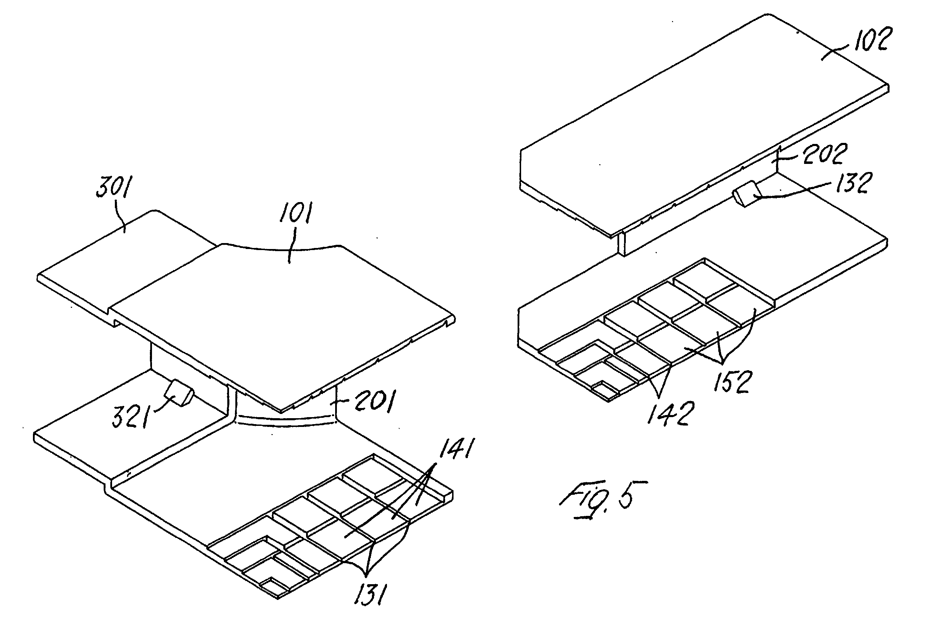

Figures 3 and 4 show a cross-section view of the connection in two different assembly situation. In Figure 3, the connection is shown in the situation in which it must be placed in a corner at an angle greater than 90°. Marked with dashes and dots is the portion 121 of the flap 101 of the element 1 which is to be removed. Likewise, in Figure 4 is shown the portion 122 of the flap 102 of the element 2 which is the one to be removed in this case.

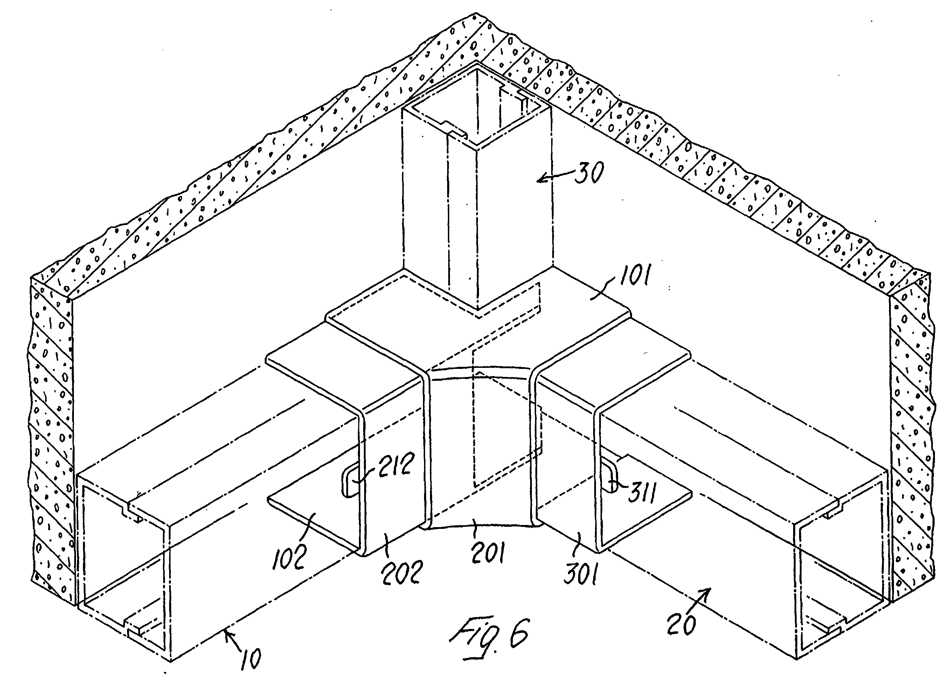

Figure 5 illustrates a second embodiment of the connection according to the present invention. The corresponding parts are designated by the same numbers. The flaps 101 of the element 1, in this case, present portions 141 delimited with respect to one another and to the rest of each flap 101 by lines of weakening 131. An altogether analogous situation is that found on the flaps 102 of the element 2, with the portions 152 delimited by the lines of weakening 152. Note that the portions 141 of the element 1 and 152 of the element 2 preferably are made with a thickness which is all the smaller, the smaller their area.

In Figure 6, it is possible to note an application of the embodiment of the angle connection illustrated in Figure 5. At the corner where the connection has been positioned, a cable trunking 30 has also been positioned set at right angles to the plane of the flap 101 of the element 1 of the connection. Since part of the said flap has been removed by taking away the portions 141 of the same, the cables housed in the cable trunking 30 may be fed towards the other two cable trunkings 10 and 20 connected to the connection.

The operation of the connection according to the present invention will appear evident from what follows. As emerges from Figure 1 of the attached drawings, the angle connection according to the present invention is made of two elements, of which one, the element indicated by 1 1 in Figure 1, is made with the two mouths having their respective axes oriented at a given angle, and preferably at 90°. By inserting the element 2 in the mouth 401 of the element 1, the connection is made as illustrated in Figure 2, i.e., when the two walls meet roughly at right angles. Of course, the walls form angles that may even differ considerably from a right angle. In this case, quite a few problems regarding the adaptation of the connection arose with the devices known to the state of the art. In the case of the connection according to the present invention it is, instead, sufficient to insert the element 2 into the element 1, choose the most suitable positioning of the said element 2 with respect to the angle of the walls, and then subsequently remove the portions 121 of the flaps 101 in the case of angles greater than 90°, and the portions 122 of the flaps 102 in the case of angles of less than 90°.

The absence of any constraint between the two elements of the connection enables both oscillation and translation of one element with respect to the other, thus increasing the possibility of relative positioning.

In this way, the connection is properly positioned with respect to the corner in which it is inserted, without there remaining parts of the ducted system uncovered or the cables or the like being subject to deformation or hindered by structural elements of the connection itself.

In the embodiment illustrated in Figures 5 and 6, the angle connection according to the invention presents a further advantage. In fact, there are formed, on the internal face of the flap 101 of the element 1 and of the flap 102 of the element 2, the portions 141 and 152, respectively, that may be removed from the said flaps thanks to the lines of pre-fracture 131 and 142. As illustrated in Figure 6, the removal of these portions makes it possible to insert the cables carried by a cable trunking 30 at right angles to the connection, in this way exploiting one type of solution that was not available with the connections of the type known up to today. Like this, in fact, there is the possibility of joining, in a single point of the system, as many as three lines of cable. As was said previously, the thickness of the portions 141 and 152 is different in such a way that an area of limited size presents a smaller thickness, thus requiring only a minimal operator effort to remove it.

## Claims

1. Adjustable angle connection for cable trunkings or the like, the said connection comprising a first element (1) provided with two mouths (401, 501) set with their respective axes oriented with respect to one another so as to form a given angle, one (501) of the said mouths being provided with means of coupling (301, 311) with a cable trunking or the like, the other mouth (401) presenting the possibility of being coupled with one end of a second element (2), which is provided at its opposite end with means for coupling (212) with a cable trunking, the said second element presenting the possibility of being connected with the said first element in an oscillating way with respect to the latter, **characterised in that** the axis of oscillation is translatable along the second element (2).

2. Angle connection according to Claim 1, **characterised in that** the said first element (1) comprises two flaps (101) set on planes parallel to one another, connected together by a flap (201), preferably made out of one piece with the said flaps (101), set substantially perpendicular to the planes of the said flaps (101), the two sides (151, 161) of each flap (101) that are to rest against the walls being parallel to the direction of each of the axes of the mouths (401, 501).

3. Angle connection according to Claim 2, **characterised in that** at the mouth (401) that is to be coupled with the said second element (2), on the said flaps (101) there are provided one or more guide lines (111) for the removal of at least one portion (121) of the said flaps (101), the said guide lines being inclined at a given angle with respect to the axis of the mouth (401).

4. Angle connection according to Claim 1, **characterised in that** the said second element (2) presents a substantially C-shaped profile, it being substantially a rectilinear element consisting of two flaps (102) set on parallel planes, joined by a flap (202) perpendicular to the planes of the aforesaid flaps (102).

5. Angle connection according to Claim 4, in which at the end designed for joining the said second element (2) with the said first element (1), on the said flaps there are provided one or more guide lines (112) for the removal of at least one portion (122) of the said flaps, the said guide lines (112) being inclined at a given angle with respect to the perpendicular to the axis of the said second element (2).

6. Angle connection according to Claim 2, in which on the said flaps (101) set on parallel planes of the said first element (1), there are provided, on contiguous areas that are substantially rectangular, one or more portions (141) that may be removed, delimited by pre-fracture lines (131), preferably of a thickness smaller than that of the said flaps (101).

7. Angle connection according to Claim 6, in which the said portions (141) have a thickness which is all the smaller, the smaller their area.

8. Angle connection according to Claim 4, in which on the said flaps (102) set on parallel planes of the said second element (2), there are provided, on contiguous areas that are substantially rectangular, one or more portions (152) that may be removed, delimited by pre-fracture lines (142), preferably of a thickness smaller than that of the said flaps (102).

9. Angle connection according to Claim 6, in which the said portions (152) have a thickness which is all the smaller, the smaller their area.

## Patentansprüche

1. Verstellbare Eckverbindung für Kabelkanäle oder Ähnliches, die ein erstes Element (1) aufweist, das mit zwei Öffnungen (401, 501) versehen ist, die so zueinander angeordnet sind, dass ihre jeweiligen Achsen einen bestimmten Winkel bilden, wobei eine (501) dieser Öffnungen mit Einrichtungen (301, 311) zur Verbindung mit einem Kabelkanal oder Ähnlichem versehen ist und die andere Öffnung (401) mit einem Ende eines zweiten Elements (2) verbunden werden kann, das an seinem gegenüberliegenden Ende mit einer Einrichtung (212) zur Verbindung mit einem Kabelkanal versehen ist, wobei dieses zweite Element mit dem ersten Element bezüglich des ersten Elements schwingend verbunden werden kann, **dadurch gekennzeichnet, dass** die Schwingungsachse entlang dem zweiten Element (2) verschiebbar ist.

2. Winkelverbindung nach Anspruch 1, **dadurch gekennzeichnet, dass** das erste Element (1) zwei Abschnitte (101) aufweist, die in parallel zueinander verlaufenden Ebenen angeordnet sind und miteinander durch einen Abschnitt (201) verbunden sind, der vorzugsweise einteilig mit den Abschnitten (101) ausgebildet ist und im Wesentlichen senkrecht zu den Ebenen der Abschnitte (101) angeordnet ist, wobei die beiden Seiten (151, 161) jedes Abschnitts (101), die an den Wänden anliegen sollen, parallel zu der Richtung jeder der Achsen der Öffnungen (401, 501) angeordnet sind.

3. Winkelverbindung nach Anspruch 2, **dadurch gekennzeichnet, dass** an der Öffnung (401), die mit dem zweiten Element (2) verbunden werden soll, an den Abschnitten (101) eine oder mehrere Führungsschienen (111) zur Entfernung von wenigstens einem Teil (121) der Abschnitte (101) vorgesehen sind, wobei diese Führungsschienen in einem bestimmten Winkel bezüglich der Achse der Öffnung (401) geneigt sind.

4. Winkelverbindung nach Anspruch 1, **dadurch gekennzeichnet, dass** das zweite Element (2) ein im Wesentlichen C-förmiges Profil hat und ein im Wesentlichen geradliniges Element ist, das aus zwei Abschnitten (102) besteht, die in parallelen Ebenen angeordnet und durch einen Abschnitt (202) verbunden sind, der senkrecht zu den Ebenen der Abschnitte (102) angeordnet ist.

5. Winkelverbindung nach Anspruch 4, bei der an dem Ende, das für die Verbindung des zweiten Elements (2) mit dem ersten Element (1) an den Abschnitten eine oder mehrere Führungsschienen (112) zur Entfernung von wenigstens einem Teil (122) der Abschnitte vorgesehen sind, wobei die Führungsschienen (112) in einem bestimmten Winkel bezüglich der Achse des zweiten Elements (2) geneigt sind.

6. Winkelverbindung nach Anspruch 2, bei der an den Abschnitten (101), die in parallelen Ebenen des ersten Elements (1) angeordnet sind, in aneinander grenzenden, im Wesentlichen rechtwinkligen Bereichen ein oder mehrere entfernbare Teile (141) vorgesehen sind, die durch Sollbruchlinien (131) begrenzt sind und deren Dicke vorzugsweise geringer als die der Abschnitte (101) ist

7. Winkelverbindung nach Anspruch 6, bei der die Teile (141) eine Dicke haben, die desto geringer ist, je kleiner ihre Fläche ist.

8. Winkelverbindung nach Anspruch 4, bei der an den Abschnitten (102), die in parallelen Ebenen des zweiten Elements (2) angeordnet sind, in aneinander grenzenden, im Wesentlichen rechtwinkligen Bereichen ein oder mehr entfernbare Teile (152) vorgesehen sind, die durch Sollbruchlinien (142) begrenzt sind und deren Dicke vorzugsweise geringer als die der Abschnitte (102) ist.

9. Winkelverbindung nach Anspruch 6, bei der die Teile (152) eine Dicke haben, die desto geringer ist, je kleiner ihre Fläche ist.

## Revendications

1. Connexion d'angle ajustable pour des lignes de câble ou analogue, la connexion comprenant un premier élément (1) muni de deux embouchures (401, 501) ayant leur axe respectif orienté l'un par rapport à l'autre de manière à faire un angle donné, l'une (501) des embouchures étant munie de moyens de couplage (301, 311) avec une ligne de câble ou analogue, l'autre embouchure (401) présentant la possibilité d'être couplée à une extrémité d'un deuxième élément (2) qui est prévu à son extrémité opposée par des moyens de couplage (202) à une ligne de câble, le deuxième élément présentant la possibilité d'être connecté au premier élément d'une manière oscillante par rapport au dernier, **caractérisée en ce que** l'axe d'oscillation peut être translaté le long du deuxième élément (2).

2. Connexion d'angle suivant la revendication 1, **caractérisée en ce que** le premier élément (1) comprend deux flan (101) disposés dans des plans parallèles l'un à l'autre reliés ensembles par un flan (201) de préférence constitué d'une seule pièce avec les flans (101) et disposés sensiblement perpendiculairement aux plans des flans (101), les deux côtés (151, 161) de chaque flan (101) qui doivent venir contre les parois étant parallèles à la direction de chacun des axes des embouchures (401, 501).

3. Connexion d'angle suivant la revendication 2, **caractérisée en ce qu'**à l'embouchure (401) qui doit être couplée au deuxième élément (2), il est prévu sur les flans (101) une ligne (111) ou plusieurs lignes (111) de guidage pour l'enlèvement d'au moins une partie (121) des flans (101), les lignes de guidage étant inclinées d'un angle donné par rapport à l'axe de l'embouchure (401).

4. Connexion d'angle suivant la revendication 1, **caractérisée en ce que** le deuxième élément (2) présente un profil sensiblement en forme de C en étant un élément sensiblement rectiligne consistant en deux flans (102) dans des plans parallèles réunis par un flan (202) perpendiculaire aux plans des flans (102) mentionnés ci-dessus.

5. Connexion d'angle suivant la revendication 4, dans laquelle à l'extrémité destinée à la jonction du deuxième élément (2) au premier élément (1), il est prévu sur les flans une ligne (112) ou plusieurs lignes (112) de guidage pour l'enlèvement d'au moins une partie (122) des flans, les lignes (112) de guidage étant inclinées d'un angle donné par rapport à la perpendiculaire à l'axe du deuxième élément (2).

6. Connexion d'angle suivant la revendication 2, dans laquelle il est prévu sur les flans (101) disposés dans des plans parallèles du premier élément (101) ou sur des zones contiguës qui sont sensiblement rectangulaires, une partie (141) ou plusieurs parties (141) qui peuvent être enlevées et qui sont délimitées par des lignes (131) de prédécoupe, de préférence d'épaisseur plus petite que celle des flans (101).

7. Connexion d'angle suivant la revendication 6, dans laquelle les parties (141) ont une épaisseur qui est d'autant plus petite que leur surface est plus petite.

8. Connexion d'angle suivant la revendication 4, dans laquelle il est prévu sur les flans (102) disposés dans les plans parallèles du deuxième élément (2) ou sur des zones continues qui sont sensiblement rectangulaires, une partie (152) ou plusieurs parties (152) qui peuvent être enlevées et qui sont délimitées par des lignes (142) de prérupture, de préférence d'une épaisseur plus petite que celle des flans (102).

9. Connexion d'angle suivant la revendication 6, dans laquelle les parties (152) ont une épaisseur qui est d'autant plus petite que leur surface est plus petite.
